# EUROPEAN PATENT SPECIFICATION

(11) **EP 3 853 531 B1**
(45) Date of publication and mention of the grant of the patent: **25.10.2023**
(21) Application number: 19773388.4
(22) Date of filing: 18.09.2019
(51) Int. Cl.: F24S 25/30, F24S 25/636, H02S 20/25

(54) **AN ASSEMBLY FOR MOUNTING SOLAR PANELS AND USE OF THE ASSEMBLY**
ANORDNUNG ZUR MONTAGE VON SOLARPANEELEN UND VERWENDUNG DER ANORDNUNG
ENSEMBLE POUR LE MONTAGE DE PANNEAUX SOLAIRES ET UTILISATION DE L'ENSEMBLE

(30) Priority: 20.09.2018 SE 1851120
(43) Date of publication of application: 28.07.2021
(73) Proprietor: CC90 Composite AB, 725 98 Västerås (SE)
(72) Inventor: FORSMAN, Sten, 195 92 Märsta (SE)
(74) Representative: Swea IP Law AB
(86) International application number: PCT/EP2019/075055
(87) International publication number: WO 2020/058353

(56) References cited:
- WO-A1-2012/096344
- WO-A1-2013/037384
- JP-A- 2002 038 662
- US-A1- 2010 192 505

## Description

### Technical field

The present invention relates to an assembly for mounting solar panels on a roof. The invention relates in particular to an assembly for mounting solar panels on a roof including roofing tiles. The invention also relates to use of the assembly for mounting the solar panels on a roof including roofing.

### Background

Today's solar panels that are mounted upon, for example, tiled roofs are normally mounted by means of brackets which in turn are fastened under the roofing by fastening means. This is a costly method since the fastening means are expensive and part of the roof must be demounted in order to fasten the fastening means. Another disadvantage with this method is that the roofing often gets small gaps between the roofing tiles where rain and snow can penetrate have negative impact on the roof. Since the brackets also are mounted with fastening means that penetrates the sealing layer of the roof, rain, snow and wind the long term may undermine the roof and cause damage of the roof.

US 9,525,088 B2 discloses a fastening of a support rail for a photovoltaic module to a trapezoidal rib of a trapezoidal sheet. The support rail comprises an undercut groove with a groove opening. The trapezoidal rib comprises an upper side and a slanted side. The support rail is positioned transversely to the trapezoidal rib. The fastening includes at least one retaining element comprising a fastening section fastened to the slanted side of the trapezoidal rib, and an engaging extension non-detachably arranged thereon. The engaging extension engages the undercut groove in an engaging position. The support rail is held down against the upper side of the trapezoidal rib by the engaging extension. The fastening comprises a fastening member directly connected to the trapezoidal rib of the roof. The fastening member comprises a flat plate and two through holes which extend through the fastening member perpendicular to the flat plate's extending surface. The fastening means is connected to the roof by means of e.g. bolts. The support rail further comprises an upper groove extending along the length of the support rail and adapted to receive protrusions from the solar panels, thus connecting the solar panels to the fastening and thus to the roof. A problem with this solution is that it can only be used when the connecting surface of the roofing tile has a flat surface. Thus, if the surface isn't flat the solution can't be used. Traditional roofing tiles made of concert or bricks are commonly wave shaped and do not have any flat surface. Another problem is that it can be tricky to mount the solar panels in the upper grooves.

US 8,469,735 B2 describe an apparatus for coupling generated power to an output load. The apparatus comprises a mounting rail, adapted for electrically coupling a power element to the output load. The mounting rail comprises a frame defining a cavity; an insulative material disposed within at least a portion of the cavity; and a first at least two conductors, encapsulated within the insulative material, adapted for coupling power from the power element to the output load. AC power distribution system for use in a photovoltaic system is described. The system comprises a photovoltaic (PV) array mounted on a roof of a building and comprising a plurality of mounting rails upon which the PV panels are mounted. Each mounting rail is terminated into a cable for carrying the generated AC power to a point of common connection. The document does not mention how to secure the mounting rails to the roof.

US 20170063301 describes an assembly for joining and electrically connecting two solar panel rail guides. The assembly comprises an elongated rail guide on which the solar panels are mounted. The solar panel rail guides comprise top rails and side rails for supporting the solar panels. The document does not mention any solution for securing the solar panels to the roof. US8938932 discloses a rail-less roof mounting system for installing photovoltaic (PV) modules on a roof structure. The mounting system comprises a top slider having a longitudinal groove arranged on a bottom side of the top slider, a base mount assembly for fastening the top slider to the roof. The base mount assembly comprises a vertical engaging portion adapted to engage with the groove when the vertical engaging portion is inserted in the groove. The mount assembly comprises a screw adapted to lock the vertical engaging portion to the roof and the vertical engaging portion comprises a horizontally protruding portion including a through hole for receiving the screw. A problem with this roof mounting system is that the mounting of the rails to the roof becomes unstable.

WO2012/096344 A1 discloses another system for mounting PV modules on a roof.

### Summary

It is an aim of the present invention to at least partly overcome the above problems, and to provide an improved assembly for mounting solar panels to a tiled roof.

This object is achieved by a mounting assembly as defined in claim 1.

The mounting assembly comprises:
- a support rail having a longitudinal groove with a groove opening arranged on a bottom side of the support rail,
- a solar panel fastener for fastening the solar panel to the support rail, and
- a roof fastener for fastening the support rail to the roof, wherein the roof fastener (comprises an engagement member adapted to engage with the groove when the engagement member is inserted in the longitudinal groove, the roof fastener comprises a locking mechanism comprising an elongated fastening element for insertion through a prefabricated hole in the roofing tile for locking the engagement member to the roofing tile and the roof fastener comprises a through hole for receiving the fastening element. The engagement member comprises two spaced apart engagement parts for engagement with the groove, and the engagement parts are arranged on opposite sides of the through hole.

There is a space between the engagement parts and the through holes is disposed in that space. The elongated fastening element extends from the space between the engagement parts through the through hole of the roof fastener to the opposite end of the roof fastener when the roof fastener is attached to the roof.

Due to the fact that the two spaced apart engagement parts are arranged on opposite sides of the through hole, the support rail is located above and aligned with the elongated fastening element that is attached to the roof tile when the support rail is mounted on the roof. Thus, the mounting of the rails to the roof becomes robust and stable.

For example, the elongated fastening element is a threaded bolt or threaded screw.

According to some aspects, the through hole extends through a central part of the roof fastener. This makes the mounting of the support rails to the roof even more robust and stable.

According to some aspects, the engagement parts are elongated in a direction transverse an axis defined by the trough hole, the engagement parts extend on opposite sides of the through hole and thus partly surrounds the through hole. Thus, the engagement parts constitute a reinforcement of the trough hole and improves the strength of the roof fastener. The axis of the through hole is aligned with a longitudinal axis of the fastening element when the fastening element is penetrating through the through hole.

According to some aspects, the elongated fastening element has a flange, and the locking mechanism comprises a nut adapted to engage with the fastening element, and the engagement member is locked to the tile in a fixed position when the fastening element and the nut are tightened. This makes it easy and fast to mount the roof fastener to the roof tiles since only one fastening element and nut is needed for the connection.

According to an aspect of the invention, the engagement member comprises a recess in connection to the through hole for receiving a part of the elongated fastening element, such as the nut or the flange.

According to some aspects, the elongated fastening element is provided with screw threads, and the locking mechanism comprises a nut adapted to engage with the fastening element by means of complementary screw threads.

According to some aspects, wherein the engagement parts are resilient and designed to attach to the groove by snap fit when the engagement parts are inserted into the groove. For example, the engagement parts are designed to snap fit with protruding elements arranged in the groove. This makes it fast and easy to attach the support rails to the roof fastener. Suitably, the roof fastener is attached to the roof in a first step, and the support rails are attached to the roof fastener in a second step.

According to some aspects, the roof fastener comprises two upper surfaces arranged on opposite sides of the engagement member, a bottom side of the support rail is provided with elongated feet disposed on opposite sides of the groove and extending in the longitudinal direction of the support rail, and the feet are adapted to bear on the upper surfaces the roof fastener when the engagement parts are inserted in the longitudinal groove, and the upper surfaces of the roof fastener and the underside of the feet of the support rail are provided with corresponding patterns of projections and recesses to prevent sliding between the feet and the roof fastener. Thus, sliding between the support rail and the roof fastener in the longitudinal direction of the support rail is prevented.

According to some aspects, the two upper surfaces of the roof fastener is provided with a plurality of elongated first riflings, and an underside of each of the feet is provided with a plurality of elongated second riflings arranged non parallel with the groove and adapted to engage with the first riflings of the roof fastener when the engagement parts are inserted in the longitudinal groove. With riflings are meant grooves arranged in parallel and at a distance from each other. The riflings form corresponding patterns of ridges and valleys on the upper surfaces of the roof fastener and the underside of the feet of the support rail. Thus, sliding between the support rail and the roof fastener in the longitudinal direction of the support rail is efficiently prevented.

According to some aspects, the second riflings are arranged substantially perpendicular to the longitudinal groove. With "substantially perpendicular" is meant at an angle between 80° and 100° with respect to the longitudinal axis of the longitudinal groove.

According to the invention, the roof fastener comprises a lower disc having a bottom surface for resting on the roofing tile and a jagged top surface, and an upper disc connected to the engagement member and having a jagged bottom surface adapted to mate to the jagged top surface of the lower disk in a plurality of different angular positions relative the lower disc. This allows the direction the support rail relative the tiles to be changed by just rotating the upper disc which allows for greater freedom when mounting the solar panel. Thus, the support rails can be mounted in a longitudinal direction as well as transvers direction with respect to the roof.

According to an aspect of the invention, the bottom surface of the lower disc having is arced to fit on a wavy roofing tile.

According to an aspect of the invention, the through-hole extends through the upper and lower discs, and the upper and lower discs are attached to each other when the fastening element and the nut are tightened.

According to an aspect of the invention, each the upper and lower discs are provided with through-holes adapted to receive the fastening element when the through-holes are aligned, and the upper and lower discs are attached to each other when the fastening element and the nut are tightened.

According to some aspects, said through-holes extend through the upper and lower discs, and the upper and lower discs are attached to each other when the fastening element and the nut are tightened.

According to some aspects, the solar panel fastener comprises an upper portion for holding the solar panel and a lower portion for attaching the solar panel fastener to the support rail, and the lower portion and the support rail are arranged such that the solar panel fastener can be attached to the support rail at selectable positions along the support rail. This makes it fast and easy to mount the solar panels to the support rails. Due to the fact that the solar panel fastener can be attached to the support rail at a number of selectable positions along the support rail on the roof, the position of the solar panel fastener can be adjusted to solar panels of different sizes. Further, the positions of the support rails on the roof are not critical since the attaching mechanism for the solar panel can be adjusted along the support rail.

According to an aspect of the invention, the support rail has two longitudinal second grooves with groove openings arranged at opposite lateral sides of the support rail, and the lower portion of the solar panel fastener comprises engagement elements adapted to engage with the second grooves in such way that the solar panel fastener is fixed in a transverse direction when the engagement elements are inserted in the second grooves. This provides easy and fast connection of the solar panel fastener to the support rail since it only needs to engage with the second grooves for it to be fixed in a transverse direction. This can be, for example, be done by just pushing the solar panel fastener onto the support rail and snapping the engagement elements into the second grooves. Thus, no tools or other parts are necessary for connecting the solar panel fastener.

According to an aspect of the invention, the support rail comprises a body made of a first material and a friction layer made of a second material that is softer than the first material and disposed on an upper side of the body, and the solar panel fastener has a contact surface provided with one or more protruding parts adapted to be in physical contact with the friction layer when the engagement elements are engaged with the second longitudinal grooves. The friction layer prevents the solar panel fastener from moving along the support rail when the when the engagement elements are inserted in the second grooves.

According to an aspect of the invention, the assembly comprises a locking mechanism for locking the solar panel fastener to the support rail in a longitudinal direction.

According to an aspect of the invention, at least one lateral side of the support rail is provided with a row of indentations arranged along a longitudinal axis of the support rail, and the lower portion of the solar panel fastener is provided with at least one protrusion arranged to mate with said indentations to lock the solar panel fastener to the support rail in a longitudinal direction. Thus, the solar cell fastener is prevented from moving along the support rail in a longitudinal direction. The row of indentations and the at least one protrusion makes it possible to attach the solar panel fastener to the support rail at a number of selectable positions along the support rail on the roof, and by that makes it possible to select a suitable position for the solar cell fastener. This provides an easy and fast connection of the solar panel fastener in a desired position along the support rail. The solar panel fastener only needs to engage with one or a few indentations at the desired position for it to be fixedly attached to the support rail in the selected position.

According to an aspect of the invention, each of the lateral sides of the support rail is provided with a row of indentations arranged along a longitudinal axis of the support rail, and the lower portion of the solar panel fastener is provided with at least two protrusions. The two protrusions are arranged on opposite sides of the solar panel fastener, and each protrusion is arranged to mate with one of the rows of indentations. This improves the attachment of the solar panel fastener and accordingly the stability of the solar cell panel.

According to an aspect of the invention, the support rail comprises a body made of an electrically insulating material, the body comprises a plurality of longitudinal channels extending from end to end of the support rail, and a plurality of electric conductors disposed in the channels for transferring power produced by the solar panel to an external load. Thus, the support rails can be used for transferring generated power from the solar panel to an external load.

The invention also relates to the use of the assembly according to the invention for mounting solar panels on a roof including roofing tiles provided with prefabricated through holes.

### Brief description of the drawings

The invention will now be explained more closely by the description of different embodiments of the invention and with reference to the appended figures.
- Fig. 1: shows an example of an assembly according to the invention mounted on a roofing tile seen from a perspective view.
- Fig. 2a: shows an example of a support rail seen oblique from above.
- Fig. 2b: shows the support rail seen oblique from below.
- Fig. 3a: shows an example of a solar panel fastener seen oblique from above.
- Fig. 3b: shows the solar panel fastener seen oblique from below.
- Fig. 4a: shows an example of a roof fastener in a perspective view from below.
- Fig. 4b: shows the roof fastener of figure 4a in a perspective view from above.
- Fig. 5a: shows another example of a roof fastener in a perspective view from above.
- Fig. 5b: shows the roof fastener of figure 5a in a perspective view from below.
- Fig. 6: shows another example of a support rail seen in a perspective view from below.
- Fig. 7: shows the support rail of figure 6 and an upper part of the roof fastener of figures 5a-b when the support rail is mounted to the roof fastener.
- Fig. 8: shows an example of a fastening element in the form of a resilient screw.
- Fig. 9: shows another example of a roof fastener including the resilient screw shown in figure 8.
- Fig. 10: shows an example of a tiled roof having of solar panels attached to the tiles using an assembly for mounting solar panels according to the invention.

### Detailed description

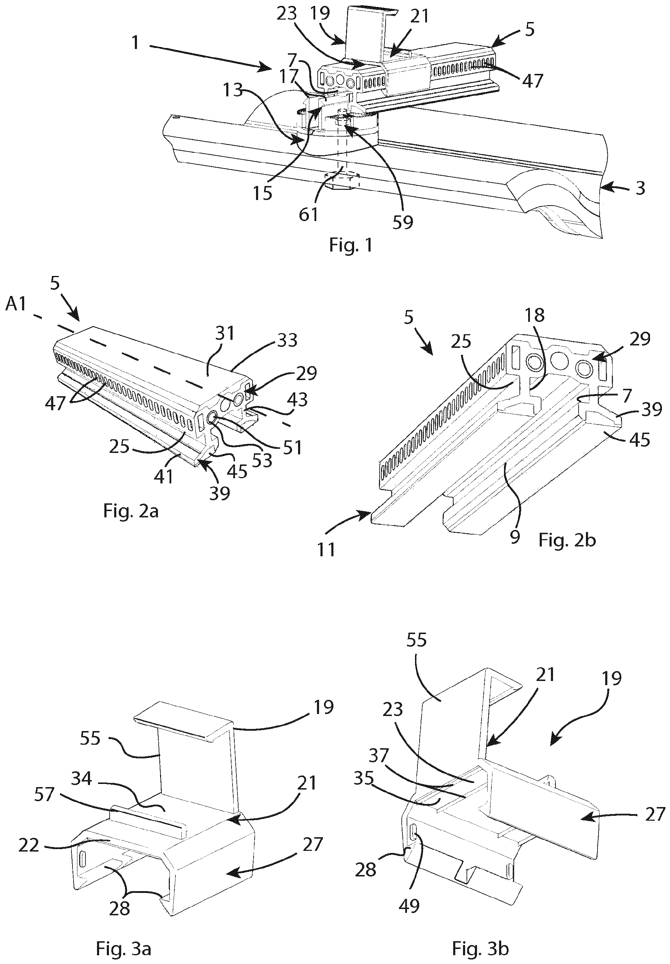

Figure 1 shows a perspective view of an assembly 1 for mounting solar panels on a roofing tile 3 on a tiled roof. The mounting assembly 1 comprises a support rail 5, a roof fastener 13 for fastening the support rail to the roofing tile 3 and solar panel fastener 19 for fastening the solar panel to the support rail. The solar panel fastener 19 comprises an upper portion 21 for holding the solar panel and a lower portion 23 for attaching the solar panel fastener to the support rail.

Figure 2a shows an example of the support rail seen oblique from above, and figure 2b shows the support rail seen oblique from below. The support rail 5 has a longitudinal first groove 7 as seen in figure 2b. The first groove 7 has a groove opening 9 arranged on a bottom side 11 of the support rail 5. In this example, the support rail 5 comprises two longitudinal second grooves 25 with groove openings arranged at opposite lateral sides of the support rail.

The support rail 5 comprises a body 29 made of a first material. The first material is preferably an electrical insulating material, for example, plastic with a low electrical conductivity.

The support rail 5 further comprises a friction layer 31 made from a second material that is softer than the first material. The second material can, for example, be rubber or a soft plastic. The friction layer 31 is disposed on an upper side 33 of the body. Preferably, the friction layer 31 extends across the entire upper side of the support rail. The friction layer 31 is designed to prevent the solar panel fastener 19 from sliding in a longitudinal direction when the solar panel fastener is fixed to the support rail 5.

In this example, the support rail 5 comprises two elongated feet 39. The feet extend in a longitudinal direction along at least a part of the length of the body 29. In the example shown in figures 2a-b, the feet comprise a lower segment 41 extending transversally relative the body 29 and are adapted to be in contact with the roof fastener 13. The feet 39 also comprise an upper segment 43. The upper segment 43 protrudes from the body 29 in an axial direction and has a first end connected to the body 29 and a second end connected to the lower segment 41. The lower segment comprises an underside 45 adapted to be in contact with the roof fastener. In one aspect, the feet 39 are mainly made from the first material except for the underside 45. In one aspect, the underside is made of a resilient material. For example, the underside 45 of the feet 39 may comprise a second material that is softer than the first material of the body.

In this example, each of the lateral sides of the support rail 5 are provided with a row of indentations 47. In this example, the indentations 47 are openings in the lateral sides of the support rail. The rows of indentations 47 extend along a major part of the length of the support rail. Preferably, the rows of indentations 47 extend along the entire length of the support rail. In one aspect, the rows of indentations 47 are arranged in parallel with a longitudinal axis A1 of the support rail 5.

In this example, the body 29 has two longitudinal channels 51 extending along the length of the support rail 5. Each of the channels 51 is provided with an electric conductor 53 for transferring power produced by the solar panel to an externa load. In one aspect, the electric conductors 53 are tubular.

Figure 3a shows an example of a solar panel fastener 19 seen oblique from above, and figure 3b shows the solar panel fastener 19 seen oblique from below. The solar panel fastener 19 comprises an upper portion 21 for attaching the solar panel fastener 19 to the solar panel, and a lower portion 23 for attaching the solar panel fastener to the support rail 5. The solar panel fastener 19 also comprises a contact portion 22 arranged between the upper and lower portions 21, 23. The contact portion 22 comprises an upper contact surface 34 for contacting the solar panel, and a lower contact surface 35 for contacting the support rail 5. In this example, the upper portion 21 of the solar panel fastener 19 comprises an L-shaped solar panel bracket 55 attached to the contact portion 22. The solar panel bracket is designed to prevent movement of the solar panel in a longitudinal and an upward direction

The upper portion 21 may further comprise a support portion 57 protruding from the upper contact surface 34. The support portion 57 is disposed at a distance from solar panel bracket 55 and extends transversally with respect to the longitudinal axis A1 of the support rail when the solar panel fastener is mounted on the support rail. The support portion 57 is adapted to engage with a groove in the solar panel, thus preventing the solar panel from moving relative the support rail. The solar panel bracket 55 and the support portion 57 are designed to lock the solar panel to the solar panel fastener 19 when the solar panel is inserted in the upper part 21 of the solar panel fastener.

In this example, the lower portion 23 of the solar panel fastener 19 comprises two wings 27 protruding from the lower contact surface 35. The wings 27 are arranged at a distance from each other and defines a space for receiving an upper portion of the support rail. The wings 27 comprise engagement elements 28 adapted to engage with the second grooves 25 of the support rail 5 so that the solar panel fastener is fixed with respect to the support rail in a transverse direction. In one aspect, the wings 27 are resilient to allow snap fit of the solar panel fastener to the support rail in order to facilitate mounting of the solar panel fastener.

The lower portion 23 of the solar panel fastener 19 comprises one or more protruding parts 37 protruding from the lower contact surface 35. In this example, the protruding parts 37 are elongated ridges extending transversally with respect to the longitudinal axis A1 of the support rail, when the solar panel fastener is mounted on the support rail. The protruding parts 37 are adapted to be in physical contact with the friction layer 31 of the support rail when the engagement elements 27 are engaged with the second longitudinal grooves 25 and thus prevent the solar panel fastener from sliding on the support rail.

The lower portion 23 of the solar panel fastener and the support rail 5 are arranged such that the solar panel fastener 19 can be attached to the support rail 5 at selectable positions along the support rail. In the example shown in figure 3a-b, the lower portion 23 of the solar panel fastener 19 is provided with one or more protrusions 49 hereinafter named first engaging parts 49 arranged on the inside of the wings 27 so that they can mate with the indentations 47 of the support rail 5. This prevents the solar cell fastener 19 from moving relative the support rail 5, thus fixedly connecting the solar cell fastener to the support rail. The shape of the indentations 47 may differ depending on the shape of the first engaging parts 49. The shape of the first engaging parts 49 corresponds to the shape of the indentations 47 so that the first engaging parts 49 fits in the indentations 47. The solar panel fastener 19 is fixed in a longitudinal direction of the support rail when the protrusions are inserted in the indentations 47. In one aspect, both wings 27 are provided with inwardly protruding protrusions 49. The solar panel fastener 19 is attached to the support rail by pushing the wings 27 over the support rail 5 until the first engaging parts 49 engage with the indentations 47. The engagement elements 20 may have a beveled surface for facilitating the assembly.

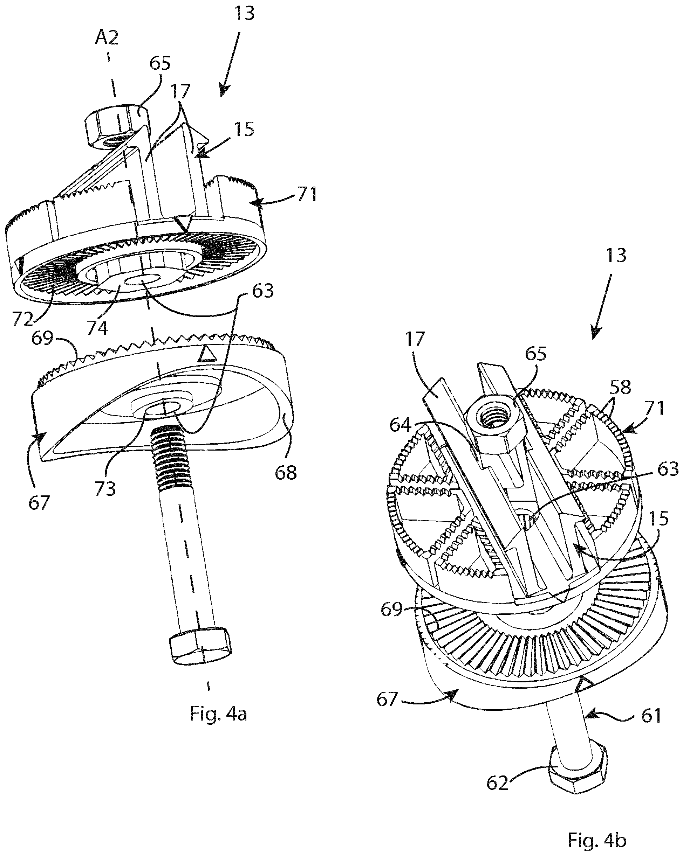

Figure 4a shows an example of a roof fastener in a perspective view from below, and figure 4b shows the roof fastener oblique in a perspective view from above. The roof fastener comprises an engagement member 15 adapted to engage with the first groove 7 of the support rail 5 when the roof fastener is inserted in the longitudinal first groove. The engagement member 15 comprises two spaced apart engagement parts 17. The first groove 7 is designed to receive the engagement parts 17 and thus connect the support rail 5 to the roof fastener 13. In this example, the first groove 7 comprises two protruding parts 18 adapted to receive the engagement parts 17 that are designed to fit the protruding parts 18, se figure 2b. For example, the engagement parts 17 can be resilient and designed to snap fit with the two protruding parts 18 in the first groove.

The roof fastener 13 comprises a locking mechanism 59 locking the engagement member 15 to the roofing tile 3, as seen in figure 1. The locking mechanism comprises an elongated fastening element 61, for example, a threaded bolt, and a nut 65 for engaging to the fastening element 61. The fastening element 61 is adapted to be inserted through a prefabricated hole in the roofing tile 3 and has head with a flange 62 arranged in one end for bearing against the roofing tile. The roof fastener comprises one or more through holes 63 for receiving the fastening element 61. The one or more through holes 63 define an axis A2 through the roof fastener. The axis A2 of the through hole is aligned with the longitudinal axis of the fastening element 61 when it is penetrating through the one or more through holes 63. There is a space between the engagement parts 17 and the through holes 63 is disposed in that space. In one aspect, the engagement parts 17 are elongated in a direction transverse the axis A2 defined by the trough hole 63. The engagement parts 17 extend on opposite sides of the through hole 63 and thus partly surrounds the through hole. Thus, the engagement parts 17 constitute a reinforcement of the trough hole 63 and thus improves the strength of the roof fastener.

The engagement member 15 comprises a recess 64 in connection to the through hole 63 for housing the nut 65 or the head with the flange 62. The nut 65 is arranged in the recess 64 above the through hole 63 when the fastening element 61 and the nut 65 are tightened. The fastening element 61 is adapted to be inserted in the one or more through holes 63 so that the engagement member 15 is locked to the roofing tile 3 in a fixed position when the fastening element 61 and the nut 65 are tightened.

In one aspect, the roof fastener 13 is provided with a plurality of spikes 58 and the roof fastener is designed such that the spikes are in contact with the underside 45 of the feet 39 of the support rail when the roof fastener is inserted in the longitudinal first groove. More particularly, the spikes are in contact with the soft and preferably resilient second material of the underside 45 of the feet 39 when the roof fastener is inserted in the longitudinal first groove. Thus, the support rail is prevented from sliding along the first groove when the engagement member 15 is engaged with the first groove 7 of the support rail.

In this example, the roof fastener 13 comprises a lower disc 67 and an upper disc 71. The lower disc 67 has a bottom surface 68 adapted to rest on the roofing tile 3 (figure 1) and a jagged top surface 69. The shape of the bottom surface depends on the shape of the upper surface of the roofing tile. In this example, the bottom surface 68 is arced or curved to be able to fit on a waved roofing tile 3. The upper disc 71 is attached to the engagement member 15. The upper disc is arranged above the lower disc 67 in an axial direction when it is mounted on the roofing tile. The upper disc 71 has a jagged bottom surface 72 adapted to mate with the jagged top surface 69 of the lower disc 67 in a plurality of different angular position relative the lower disc. In this example, each of the upper and lower discs 71,67 has a non-jagged center part 73,74. Both center parts comprise separate through holes, forming the through hole 63 adapted to receive the fastening element 61 when aligned. The upper and lower disc 71,67 are attached to each other when the fastening element and the nut 65 are tightened.

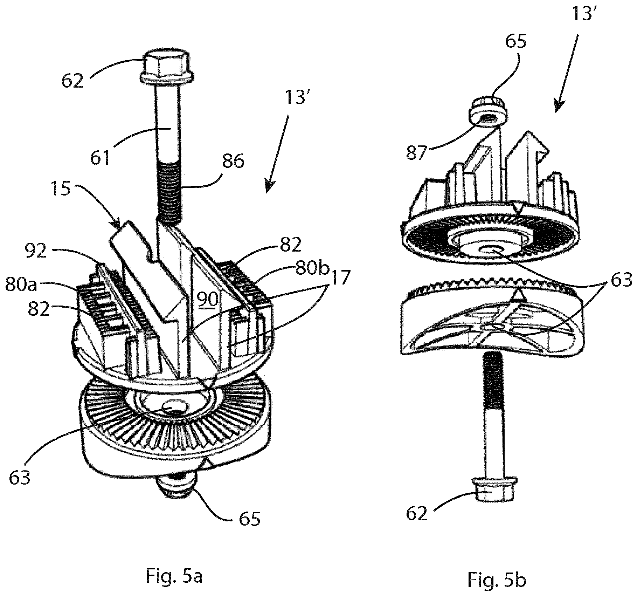

Figures 5a-b show another example of a roof fastener 13'. Components corresponding to those in figures 4a-b have been given the same reference numerals and will not be described in more detail here. The engagement member 15 comprises two spaced apart engagement parts 17 arranged on opposite sides of the through hole 63. There is a space 90 between the engagement parts 17, and the trough hole is arranged in the space 90. The elongated fastening element 61 extends from the space 90 between the engagement parts 17 through the through hole 63 of the roof fastener and protrude on the opposite side of roof fastener. The elongated fastening element 61 is a threaded bolt or threaded screw. In this example, the fastening element 61 is a threaded bolt. The elongated fastening element 61 may have a flange 62 and the locking mechanism may comprise a nut 65 adapted to engage with the fastening element 61. The flange 62 is, for example, a part of the head of the bolt. The elongated fastening element 61 has screw threads 86 and the nut has complementary screw threads 87 adapted to engage with the screw threads 86 of the fastening element 61.The engagement member 15 is locked to the tile in a fixed position when the fastening element 61 and the nut 65 are tightened. As seen from figure 5a and 5b, the nut can be arranged in the space 90 between the engagement parts 17 or on the opposite side of the roof fastener.

For example, the periphery of the roof fastener is substantially circular, and the through hole 63 extends through the centre of the roof fastener 13. In one aspect, the engagement parts 17 are elongated and resilient. Suitably, the engagement parts 17 are designed to attach to the groove 7 by snap fit when the engagement parts 17 are inserted into the groove 7. Upper ends of the engagement parts 17 are provided with outwardly projecting elements 85.

The roof fastener 13' comprises two upper surfaces 80a-b arranged on opposite sides of the engagement member 15. The upper surfaces 80a-b of the roof fastener are provided with patterns of projections and recesses to prevent sliding between the support rail and the roof fastener. For example, the upper surfaces 80a-b of the roof fastener 13' are provided with a plurality of elongated first riflings 82.

In one aspect, the roof fastener comprises mating elements 92 arranged on opposite sides of the engagement member 15. For example, the mating elements 92 are elongated ridges extending in parallel with the engagement parts 17.

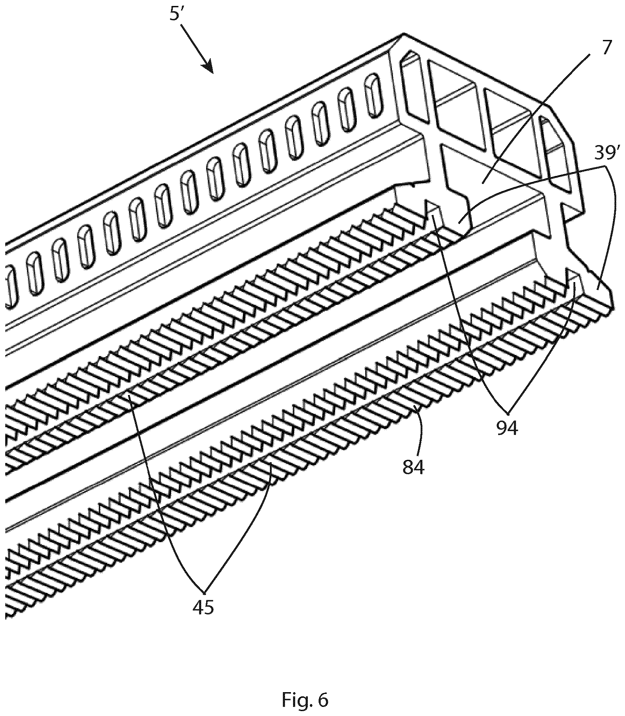

Figure 6 show another example of a support rail 5' seen in a perspective view from below. Components corresponding to those in figures 2a-b have been given the same reference numerals and will not be described in more detail here. The bottom side 11 of the support rail 5' is provided with elongated feet 39'. The feet 39' are disposed on opposite sides of the groove 7 and extend in the longitudinal direction of the support rail 5'. The feet 39' are adapted to bear on the upper surfaces 80a-b of the roof fastener when the engagement parts 17 are engaged with the longitudinal groove 7. The undersides 45 of the feet 39' of the support rail are provided with patterns of projections and recesses corresponding to the patterns of the upper surfaces 80a-b of the roof fastener to prevent sliding between the feet and the roof fastener. For example, the undersides 45 of the feet 39' comprises a plurality of elongated second riflings 84 arranged non-parallel with the groove 7 and adapted to engage with the first riflings 82 of the roof fastener when the engagement parts 17 are engaged with the longitudinal groove 7. Suitably, the second riflings 84 are arranged substantially perpendicular to the longitudinal groove 7.

In one aspect, the feet 39' of the support rail are provided with protruding parts 18 projecting into the groove 7. The protruding parts 18 are adapted to cooperate with the projecting elements 85 on the engagement parts 17 to allow snap fit of the engagement parts 17 to the groove 7.

In one aspect, the feet 39' are provided with grooves 94 extending along the length of the support rail and adapted to receive the mating elements 92 of the roof fastener when the when the engagement parts 17 are engaged with the longitudinal groove 7. The mating elements 92 are adapted to engage with the grooves 94 of the feet 39' in such way that the roof fastener is fixed in a transverse direction when the mating elements 92 are inserted in the grooves 94.

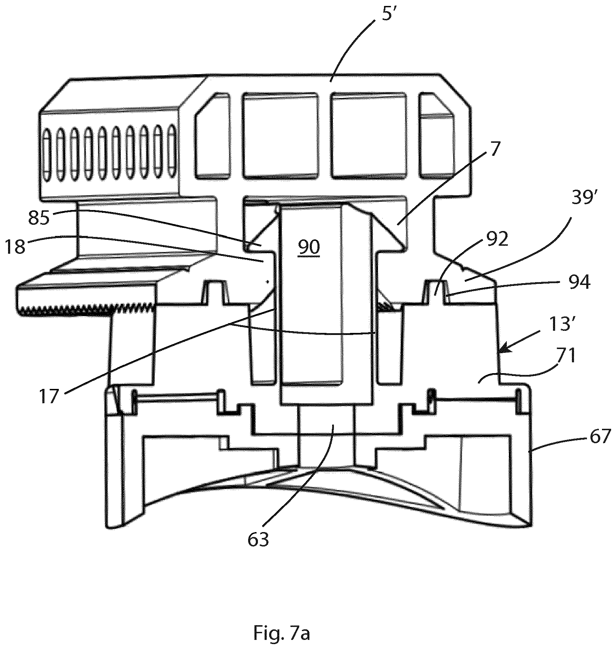

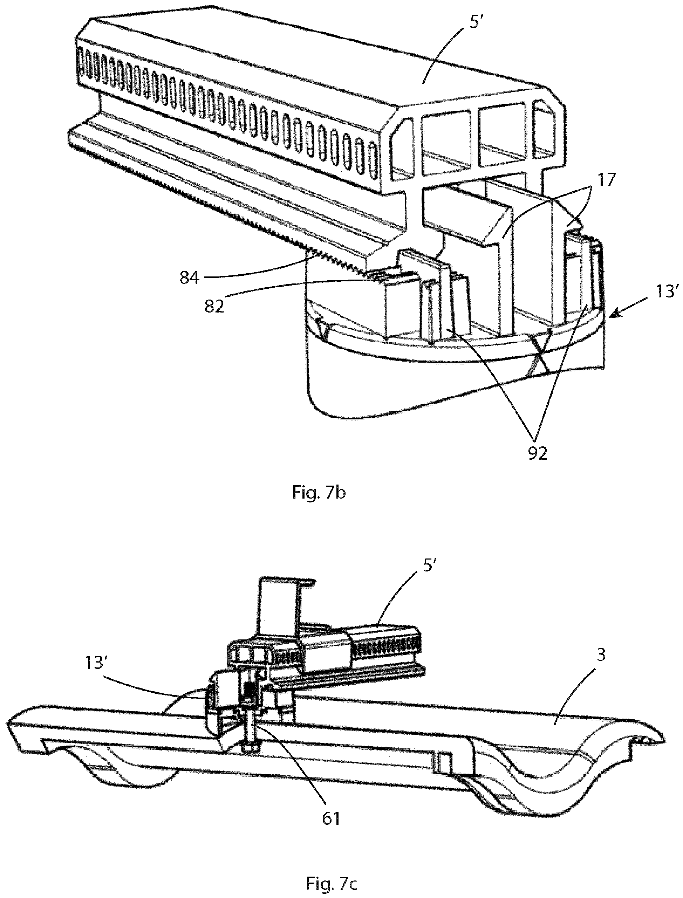

Figure 7 shows the support rail 5' and an upper part of the roof fastener 13' when the support rail is mounted to the roof fastener. The engagement parts 17 are inserted into the groove 7. The projecting elements 85 on the engagement parts 17 bear on the protruding parts 18 when the engagement member 15 is inserted into the groove 7. The feet 39' bear on the upper surfaces 80a-b of the roof fastener. The mating elements 92 of the roof fastener protrudes into the grooves 94 of the feet 39' and by that lock the support rail with respect to the fastening element in a transverse direction.

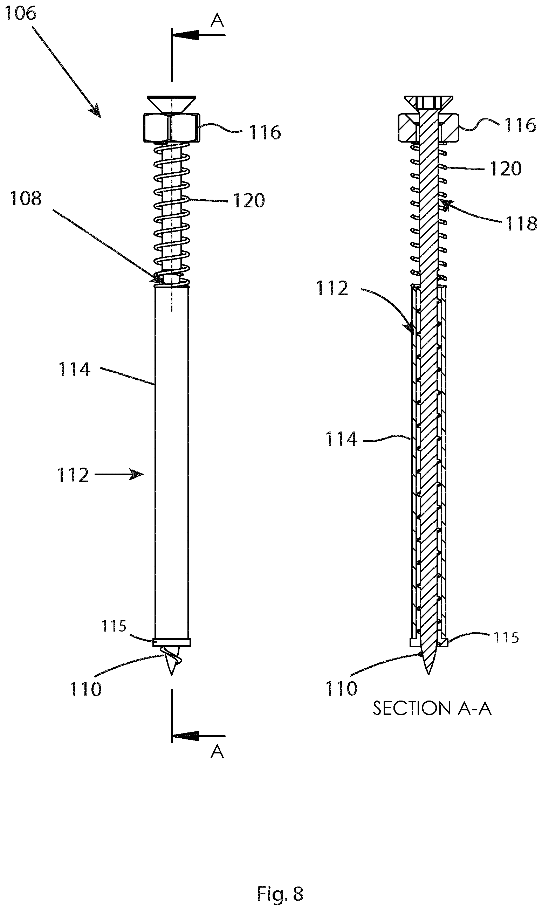

Figure 8 shows another example of a locking mechanism 106 for locking the engagement member 15 to the roofing tile 3. The locking mechanism 106 comprises an elongated fastening element 112 and washer 116. The fastening element 112 comprises a threaded screw 108 having a sharp tip 110. The threaded screw 108 comprises a head 119 and an elongated body. The washer 116 has a beveled opening for receiving the screw 108. The fastening element 106 is adapted to be inserted through the prefabricated hole in the roofing tile and further to engage with a roofing under the roof tile, such as an under-roof, to improve the fastening of the solar panels to the roof. The under-roof is, for example, made of wood.

The fastening element 112 further comprises a sleeve 114 surrounding at least a lower portion of the body of screw 108. The sleeve 114 extends in the longitudinal direction of the screw 108. The sleeve 114 is arrange movable relative the screw 108 in a longitudinal direction. A lower end of the sleeve is provided with a sealing member 115, for example, rubber sealing, for sealing against the under-roof. The fastening element 112 further comprises a spring 120 surrounding the body of the screw 108 and arranged between the washer 116 and the sleeve 114. The spring 120 provides a pressure on the sleeve towards the under-roof so that the sealing member 115 is pressed against the under-roof to achieve sealing between the sleeve and the under-roof.

The washer 116 is adapted to is be arranged in the recess 64 of the engagement member 15, and the screw 108 is adapted to be inserted through the through hole 63 of the roof fastener 13 and through the prefabricated hole in the roofing tile 3. The sharp tip 110 is adapted to be screwed into the under- roof under the roof tile 3. The beveled part of the washer is adapted to receive the head of the screw. The sleeve 116 is located in the recess 64 above the through hole 63 when the tip 110 of the screw is fixedly connected to the roofing. When the screw is tightened, the husk sleeve bears against the roofing thus increasing the pressure on the spring 120 and tightens sealing between the sleeve and the roofing.

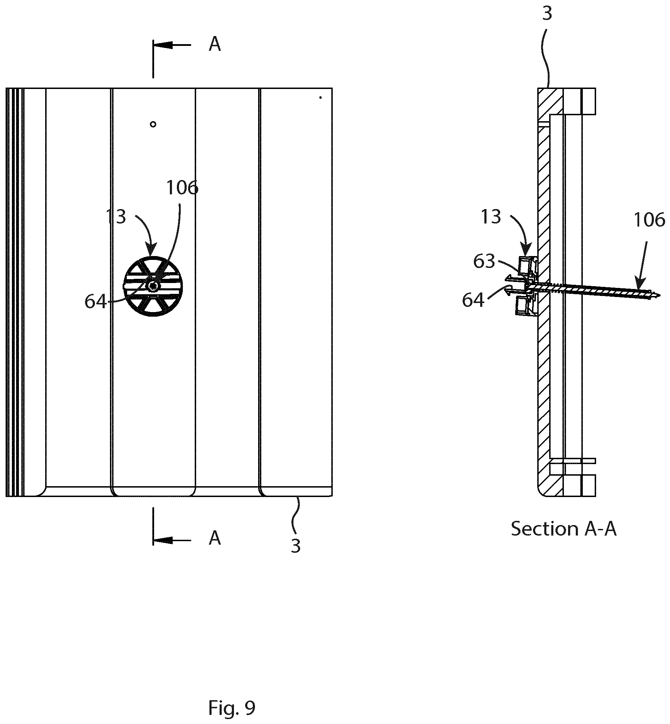

Figure 9 shows a roof fastener 13 including the locking mechanism 106 mounted on a roof tile 3 in a view from above and in a cross sectional view.

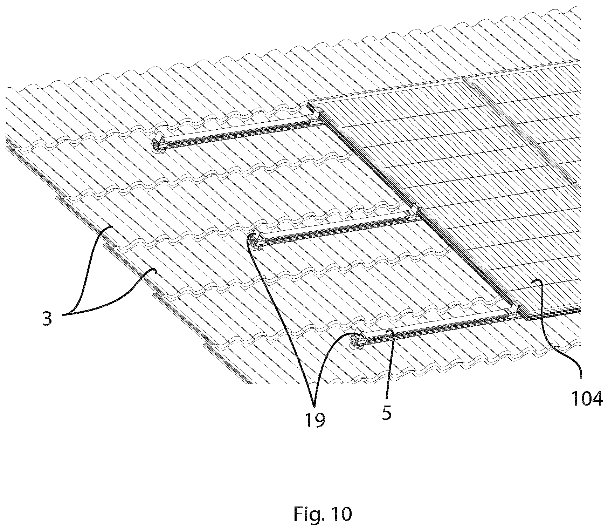

Figure 10 shows an example of a roof including roofing tiles 3 with prefabricated holes, and solar panels 104 mounted on the roof by means of an assembly according to the invention.

The present invention is not limited to the embodiments disclosed but may be varied and modified within the scope of the following claims. For example, different solar panel fasteners can be used.

## Claims

1. An assembly (1) for mounting solar panels on a roof including roofing tiles (3), wherein the mounting assembly (1) comprises:
- a support rail (5,5') having a longitudinal groove (7) with a groove opening (9) arranged on a bottom side (11) of the support rail (5),
- a solar panel fastener (19) for fastening the solar panel to the support rail (5), and
- a roof fastener (13, 13') for fastening the support rail (5) to the roof, wherein the roof fastener comprises an engagement member (15) adapted to engage with the groove (7) when the engagement member (15) is inserted in the longitudinal groove (7), the roof fastener (13,13') comprises a locking mechanism (59) comprising an elongated fastening element (61;108) for insertion through a prefabricated hole in the roofing tile (3) for locking the engagement member (15) to the roofing tile (3), and the roof fastener (13,13') comprises a through hole (63) for receiving the fastening element (61), and the engagement member (15) comprises two spaced apart engagement parts (17) for engagement with the groove (7), and the engagement parts (17) are arranged on opposite sides of the through hole (63), **characterized in that** the roof fastener (13,13') comprises a lower disc (67) having a bottom surface (68) for resting on the roofing tile (3) and a jagged top surface (69), and an upper disc (71) connected to the engagement member (15) and having a jagged bottom surface (72) adapted to mate to the jagged top surface (69) of the lower disk in a plurality of different angular positions relative the lower disc (67).

2. The assembly (1) according to claim 1, wherein the through hole (63) extends through a central part of the roof fastener (13, 13').

3. The assembly (1) according to any of the previous claims, wherein the engagement parts are elongated in a direction transverse an axis (A2) defined by the trough hole, the engagement parts (17) extend on opposite sides of the through hole (63).

4. The assembly (1) according to any of the previous claims, wherein the elongated fastening element (61) has a flange (62), and the locking mechanism (59) comprises a nut (65) adapted to engage with the fastening element (61), and the engagement member (15) is locked to the tile (3) in a fixed position when the fastening element (61) and the nut (65) are tightened.

5. The assembly (1) according to any of the previous claims, wherein the engagement parts (17) are resilient and designed to attach to the groove (7) by snap fit when the engagement parts (17) are inserted into the groove (7).

6. The assembly (1) according to any of the previous claims, wherein the roof fastener (13') comprises upper surfaces (80a-b) arranged on opposite sides of the engagement member (15), and a bottom side (11) of the support rail (5') is provided with elongated feet (39'), the feet are disposed on opposite sides of the groove (7) and extend in the longitudinal direction of the support rail (5), the feet (39) are adapted to bear on the upper surfaces (80a-b) the roof fastener when the engagement parts (17) are inserted in the longitudinal groove (7) and the upper surfaces (80a-b) of the roof fastener and the undersides (45) of the feet of the support rail are provided with corresponding patterns of projections and recesses to prevent sliding between the feet and the roof fastener.

7. The assembly (1) according to claim 6, wherein the said upper surfaces (80a-b) of the roof fastener (13') are provided with a plurality of elongated first riflings (82), and the undersides (45) of the feet (39) comprises a plurality of elongated second riflings (84) arranged non-parallel with the groove (7) and adapted to engage with the first riflings (82) of the roof fastener when the engagement parts (17) are engaged with the longitudinal groove (7).

8. The assembly (1) according to claim 7, wherein the second riflings (84) are arranged substantially perpendicular to the longitudinal groove (7).

9. The assembly (1) according to claim 4, wherein said through-hole (63) extends through the upper and lower discs (71,67), and the upper and lower discs (71,67) are attached to each other when the fastening element and the nut (65) are tightened.

10. The assembly (1) according to any of the previous claims, wherein the solar panel fastener (19) comprises an upper portion (21) for holding the solar panel and a lower portion (23) for attaching the solar panel fastener (19) to the support rail (5), and the lower portion (23) and the support rail (5) are arranged such that the solar panel fastener (19) can be attached to the support rail (5) at selectable positions along the support rail (5).

11. Use of the assembly (1) according to any of the previous claims for mounting solar panels on a roof including roofing tiles (3) provided with prefabricated through holes.

## Patentansprüche

1. Baugruppe (1) zum Montieren von Solarpaneelen auf einem Dach, das Dachziegel (3) einschließt, wobei die Montagebaugruppe (1) umfasst:
- eine Tragschiene (5, 5'), die eine Längsnut (7) mit einer Nutöffnung (9) aufweist, die an einer Unterseite (11) der Tragschiene (5) eingerichtet ist,
- ein Solarpaneelbefestigungselement (19) zum Befestigen des Solarpaneels an der Tragschiene (5), und
- ein Dachbefestigungselement (13, 13') zum Befestigen der Tragschiene (5) an dem Dach, wobei das Dachbefestigungselement ein Eingriffselement (15) umfasst, das angepasst ist, um mit der Nut (7) in Eingriff zu stehen, wenn das Eingriffselement (15) in die Längsnut (7) eingeführt ist, wobei das Dachbefestigungselement (13, 13') einen Verriegelungsmechanismus (59) umfasst, umfassend ein längliches Befestigungselement (61; 108) zum Einführen durch ein vorgefertigtes Loch in dem Dachziegel (3) zum Verriegeln des Eingriffselements (15) an dem Dachziegel (3), und wobei das Dachbefestigungselement (13, 13') ein Durchgangsloch (63) zum Aufnehmen des Befestigungselements (61) umfasst und das Eingriffselement (15) zwei voneinander beabstandete Eingriffsteile (17) zum Eingriff mit der Nut (7) umfasst und die Eingriffsteile (17) auf gegenüberliegenden Seiten des Durchgangslochs (63) eingerichtet sind, und **dadurch gekennzeichnet, dass**
das Dachbefestigungselement (13, 13') eine untere Scheibe (67), die eine untere Oberfläche (68) zum Ruhen auf dem Dachziegel (3) und eine gezackte obere Oberfläche (69) aufweist, und eine obere Scheibe (71) umfasst, die mit dem Eingriffselement (15) verbunden ist und eine gezackte untere Oberfläche (72) aufweist, die angepasst ist, um mit der gezackten oberen Oberfläche (69) der unteren Scheibe in einer Vielzahl von unterschiedlichen Winkelpositionen relativ zu der unteren Scheibe (67) zusammenzupassen.

2. Baugruppe (1) nach Anspruch 1, wobei sich das Durchgangsloch (63) durch einen zentralen Teil des Dachbefestigungselements (13, 13') erstreckt.

3. Baugruppe (1) nach einem der vorstehenden Ansprüche, wobei die Eingriffsteile in einer Richtung quer zu einer Achse (A2), die durch das Durchgangsloch definiert ist, länglich sind, wobei sich die Eingriffsteile (17) auf gegenüberliegenden Seiten des Durchgangslochs (63) erstrecken.

4. Baugruppe (1) nach einem der vorstehenden Ansprüche, wobei das längliche Befestigungselement (61) einen Flansch (62) aufweist und der Verriegelungsmechanismus (59) eine Mutter (65) umfasst, die angepasst ist, um mit dem Befestigungselement (61) in Eingriff stehen, und das Eingriffselement (15) mit dem Ziegel (3) in einer fixierten Position verriegelt ist, wenn das Befestigungselement (61) und die Mutter (65) angezogen sind.

5. Baugruppe (1) nach einem der vorstehenden Ansprüche, wobei die Eingriffsteile (17) elastisch sind und dazu ausgelegt sind, durch Schnappverbindung an der Nut (7) befestigt zu werden, wenn die Eingriffsteile (17) in die Nut (7) eingeführt sind.

6. Baugruppe (1) nach einem der vorstehenden Ansprüche, wobei das Dachbefestigungselement (13') obere Oberflächen (80a-b) umfasst, die auf gegenüberliegenden Seiten des Eingriffselements (15) eingerichtet sind, und eine Unterseite (11) der Tragschiene (5') mit länglichen Füßen (39') versehen ist, wobei die Füße auf gegenüberliegenden Seiten der Nut (7) angeordnet sind und sich in der Längsrichtung der Tragschiene (5) erstrecken, wobei die Füße (39) angepasst sind, um auf den oberen Oberflächen (80a-b) des Dachbefestigungselements zu liegen, wenn die Eingriffsteile (17) in die Längsnut (7) eingeführt sind, und die oberen Oberflächen (80a-b) des Dachbefestigungselements und die Unterseiten (45) der Füße der Tragschiene mit entsprechenden Mustern von Vorsprüngen und Vertiefungen versehen sind, um ein Gleiten zwischen den Füßen und dem Dachbefestigungselement zu verhindern.

7. Baugruppe (1) nach Anspruch 6, wobei die oberen Oberflächen (80a-b) des Dachbefestigungselements (13') mit einer Vielzahl von länglichen ersten Drallnuträumen (82) versehen sind und die Unterseiten (45) der Füße (39) eine Vielzahl von länglichen zweiten Drallnuträumen (84) umfassen, die nicht parallel zu der Nut (7) eingerichtet sind und angepasst sind, um mit den ersten Drallnuträumen (82) des Dachbefestigungselements in Eingriff stehen, wenn die Eingriffsteile (17) mit der Längsnut (7) in Eingriff stehen.

8. Baugruppe (1) nach Anspruch 7, wobei die zweiten Drallnuträume (84) im Wesentlichen senkrecht zu der Längsnut (7) eingerichtet sind.

9. Baugruppe (1) nach Anspruch 4, wobei sich das Durchgangsloch (63) durch die obere und die untere Scheibe (71, 67) erstreckt und die obere und die untere Scheibe (71, 67) aneinander befestigt sind, wenn das Befestigungselement und die Mutter (65) angezogen sind.

10. Baugruppe (1) nach einem der vorstehenden Ansprüche, wobei das Solarpaneelbefestigungselement (19) einen oberen Abschnitt (21) zum Halten des Solarpaneels und einen unteren Abschnitt (23) zum Befestigen des Solarpaneelbefestigungselements (19) an der Tragschiene (5) umfasst und der untere Abschnitt (23) und die Tragschiene (5) derart eingerichtet sind, dass das Solarpaneelbefestigungselement (19) an der Tragschiene (5) an auswählbaren Positionen entlang der Tragschiene (5) befestigt werden kann.

11. Verwendung der Baugruppe (1) nach einem der vorstehenden Ansprüche zum Montieren von Solarpaneelen auf einem Dach, das Dachziegel (3) einschließt, die mit vorgefertigten Durchgangslöchern versehen sind.

## Revendications

1. Ensemble (1) pour le montage de panneaux solaires sur un toit comportant des tuiles de toiture (3), dans lequel l'ensemble de montage (1) comprend :
- un rail de support (5, 5') ayant une rainure longitudinale (7) avec une ouverture de rainure (9) agencée sur un côté inférieur (11) du rail de support (5),
- une fixation de panneau solaire (19) pour fixer le panneau solaire au rail de support (5), et
- une fixation de toit (13, 13') pour fixer le rail de support (5) au toit, dans lequel la fixation de toit comprend un élément de mise en prise (15) adapté à venir en prise avec la rainure (7) lorsque l'élément de mise en prise (15) est inséré dans la rainure longitudinale (7), la fixation de toit (13, 13') comprend un mécanisme de verrouillage (59) comprenant un élément de fixation allongé (61 ; 108) pour insertion à travers un trou préfabriqué dans la tuile de toiture (3) pour verrouiller l'élément de mise en prise (15) à la tuile de toiture (3), et la fixation de toit (13, 13') comprend un trou traversant (63) pour recevoir l'élément de fixation (61), et l'élément de mise en prise (15) comprend deux parties de mise en prise (17) espacées pour une mise en prise avec la rainure (7), et les parties de mise en prise (17) sont agencées sur des côtés opposés du trou traversant (63), et
**caractérisé en ce que**
la fixation de toit (13, 13') comprend un disque inférieur (67) ayant une surface inférieure (68) pour reposer sur la tuile de toiture (3) et une surface supérieure dentelée (69), et un disque supérieur (71) relié à l'élément de mise en prise (15) et ayant une surface inférieure dentelée (72) adaptée à s'accoupler à la surface supérieure dentelée (69) du disque inférieur dans une pluralité de positions angulaires différentes par rapport au disque inférieur (67).

2. Ensemble (1) selon la revendication 1, dans lequel le trou traversant (63) s'étend à travers une partie centrale de la fixation de toit (13, 13').

3. Ensemble (1) selon l'une quelconque des revendications précédentes, dans lequel les parties de mise en prise sont allongées dans une direction transversale à un axe (A2) défini par le trou traversant, les parties de mise en prise (17) s'étendent sur des côtés opposés du trou traversant (63).

4. Ensemble (1) selon l'une quelconque des revendications précédentes, dans lequel l'élément de fixation allongé (61) a une bride (62), et le mécanisme de verrouillage (59) comprend un écrou (65) adapté à venir en prise avec l'élément de fixation (61), et l'élément de mise en prise (15) est verrouillé à la tuile (3) dans une position fixe lorsque l'élément de fixation (61) et l'écrou (65) sont serrés.

5. Ensemble (1) selon l'une quelconque des revendications précédentes, dans lequel les parties de mise en prise (17) sont élastiques et conçues pour se fixer à la rainure (7) par encliquetage lorsque les parties de mise en prise (17) sont insérées dans la rainure (7).

6. Ensemble (1) selon l'une quelconque des revendications précédentes, dans lequel la fixation de toit (13') comprend des surfaces supérieures (80a-b) agencées sur des côtés opposés de l'élément de mise en prise (15), et un côté inférieur (11) du rail de support (5') est pourvu de pieds allongés (39'), les pieds sont disposés sur des côtés opposés de la rainure (7) et s'étendent dans la direction longitudinale du rail de support (5), les pieds (39) sont adaptés à s'appuyer sur les surfaces supérieures (80a-b) de la fixation de toit lorsque les parties de mise en prise (17) sont insérées dans la rainure longitudinale (7) et les surfaces supérieures (80a-b) de la fixation de toit et les côtés inférieurs (45) des pieds du rail de support sont pourvus de motifs correspondants de saillies et d'évidements pour empêcher un coulissement entre les pieds et la fixation de toit.

7. Ensemble (1) selon la revendication 6, dans lequel lesdites surfaces supérieures (80a-b) de la fixation de toit (13') sont pourvues d'une pluralité de premières rayures allongées (82), et les côtés inférieurs (45) des pieds (39) comprennent une pluralité de secondes rainures allongées (84) agencées non parallèles à la rainure (7) et adaptées à venir en prise avec les premières rayures (82) de la fixation de toit lorsque les parties de mise en prise (17) sont en prise avec la rainure longitudinale (7).

8. Ensemble (1) selon la revendication 7, dans lequel les secondes rayures (84) sont agencées sensiblement perpendiculairement à la rainure longitudinale (7).

9. Ensemble (1) selon la revendication 4, dans lequel ledit trou traversant (63) s'étend à travers les disques supérieur et inférieur (71, 67), et les disques supérieur et inférieur (71, 67) sont attachés l'un à l'autre lorsque l'élément de fixation et l'écrou (65) sont serrés.

10. Ensemble (1) selon l'une quelconque des revendications précédentes, dans lequel la fixation de panneau solaire (19) comprend une partie supérieure (21) pour maintenir le panneau solaire et une partie inférieure (23) pour fixer la fixation de panneau solaire (19) au rail de support (5), et la partie inférieure (23) et le rail de support (5) sont agencés de telle sorte que la fixation de panneau solaire (19) peut être fixée au rail de support (5) au niveau de positions sélectionnables le long du rail de support (5).

11. Utilisation de l'ensemble (1) selon l'une quelconque des revendications précédentes pour le montage de panneaux solaires sur un toit comportant des tuiles de toiture (3) pourvues de trous traversants préfabriqués.
